# EUROPEAN PATENT SPECIFICATION

(11) **EP 4 278 908 B1**
(45) Date of publication and mention of the grant of the patent: **25.12.2024**
(21) Application number: 23173638.0
(22) Date of filing: 16.05.2023
(51) Int. Cl.: A24F 1/30

(54) **RELEASE VALVE FOR HOOKAH**
ÜBERDRUCKVENTIL FÜR EINE WASSERPFEIFE
SOUPAPE SURPRESSION POUR NARGUILÉ

(30) Priority: 18.05.2022 CZ 20220020
(43) Date of publication of application: 22.11.2023
(73) Proprietor: Holub, Petr, 37004 Ceske Budejovice (CZ)
(72) Inventor: Holub, Petr, 37004 Ceske Budejovice (CZ)
(74) Representative: Sedlák, Jirí

(56) References cited:
- CZ-U1- 36 323
- DE-B3- 102021 121 823
- DE-U1- 202020 104 097

## Description

### Filed of the Invention

The invention falls within the field of hookahs used for inhaling tobacco smoke or tobacco substitutes, and relates to a structural part of the hookah referred to by the skilled art as a valve.

### Background of the Invention

Hookahs have been a familiar construct used for smoke inhalation for several centuries. Hookahs provide the user with smoke that overcomes the water column, whereby the originally hot smoke is cooled and, according to some sources, purified before being drawn into the mouth.

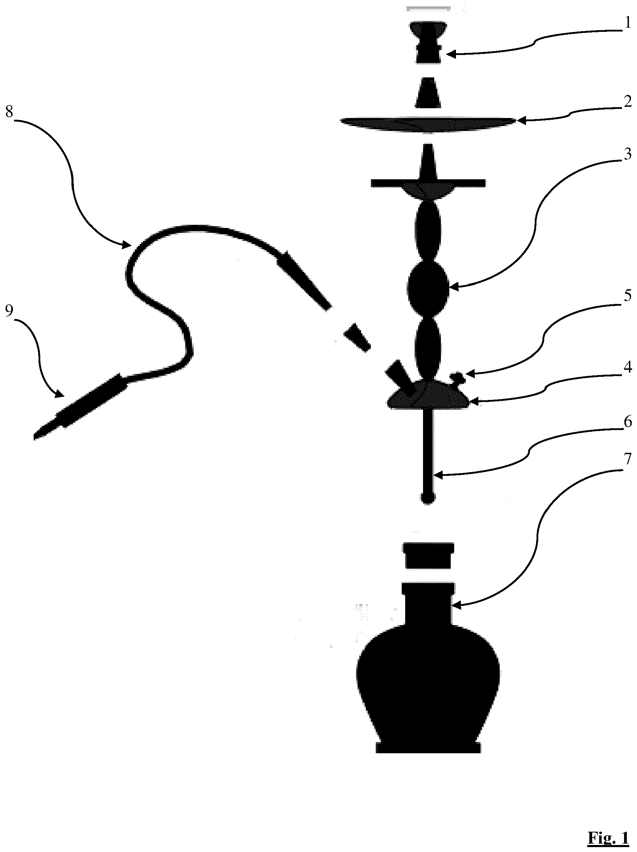

The vast majority of hookahs are constructed from the following structural components, with their relative arrangement schematically illustrated in Figure 1. If the description of the hookah follows the smoke path, the first structural component is the bowl, which is used to house the tobacco and the ember. Below the bowl is an ash tray (see relation mark 2 in Figure 1) which serves as a collector for any fallen parts of the hot embers that might be released from the bowl. The bowl is attached to a body (alternatively called the stem) that guides the hot smoke towards a gasket. The body may be fitted with decorative elements. The gasket acts as a junction for the flow of the smoke, as it conducts the smoke through the water to the hose when the smoke is drawn in, while when the hookah is puff through its valve lets the hot air and uninhaled smoke from the water jar into the surrounding environment. A downstem protrudes from the gasket to introduce the hot smoke below the level of the water poured into the water jar. Another structural component of the hookah is the water jar, which acts as a container for the water and at the same time acts as a stable base for the hookah. The water jar is enclosed by a gasket, with the only escape route for the cooled smoke being through the gasket to the hose. The hose serves as a conduit for the cooled smoke to the hookah user. The hose is terminated by a hose handle with a mouth tip (see relation mark 9 in Figure 1) which is inserted into the mouth of the user. Between the various components of the hookah there are various sealing grommets and means which are not essential for an informative listing of the main components of the hookah.

As already mentioned, the gasket is a structural part of the hookah that is indispensable for the proper functioning of the hookah. Not only does the gasket pressure seal the water jar, but it also allows the water jar space to be purged above the water being poured, thanks to the existence of valve, which is usually part of the gasket. On the other hand, there are hookahs where the valve is separate, either on the water jar or on the body, but these are mostly artistically designed hookahs.

Hookah puffing is an activity in which the user does not puff from the hookah but instead blows into the hookah. Blowing cools the water jar area and at the same time cleans it of smoke residue.

The problem that standard hookahs face is that many users are unable to estimate how much to puff the hookah. It's common for the user to blow into the water jar hard enough to overcome the flow rate of the valve, whereupon the sudden overpressure of air inside the water jar will push water through the dowstem and body of the hookah and into the bowl, causing the tobacco to get wet.

As for valves, they are designed as ball valves. The construction of a hookah ball valve may be imagined as being a ball loosely placed in a hole with a tapered end connecting the inside of the water jar to the outside, which is seated by the earth's gravity at the bottom of the hole near the tapered end and touches the tapering walls of the hole, thus closing it. When the user draws the smoke, the vacuum inside the water jar exerts a pressure through the opening on the ball to draw it towards the tapering opening, thereby further sealing the opening. Conversely, when puffing, the overpressure acts on the ball by pushing it towards the wider part of the hole, whereupon the ball stops touching the walls of the hole and the overpressure from the water jar is allowed to escape around the ball of the valve through the hole into the surrounding environment of the hookah.

The aforementioned lack of low valve throughput is currently being addressed by increasing the number of balls and holes in the valve, with seven-ball valves also being seen on the market. However, this is disadvantageous as it appears that users can overload valves with several balls. In addition, this mechanism is difficult to manufacture, it is also common for the balls to become stuck during maintenance and disassembly of the gasket and valve, and the ball valve design is sensitive to contamination that can affect the tightness of the valve, especially if a grain of dirt gets between the ball and the hole wall.

The invention of DE 20 2020 104 097 U1 is known in which the problem of zero puffing of the crown of a hookah with tobacco is solved. By means of special channels, air from the puffing of the hookah is allowed to travel into the crown of the hookah with tobacco.

The disadvantage of this invention is that it still relies on ball valves, which have been described above as being unreliable for very intense puffing, which can allow water to enter the hookah crown.

The object of the invention is to create a hookah which is capable of releasing the overpressure caused by user from the water jar when blowing without causing water to spill into the bowl, which is unbreakable due to its robust construction, but at the same time easy to fabricate, and which is easy to clean.

### Summary of the Invention

The task is solved by a hookah according to the invention as defined in the present claim 1.

The hookah valve is used to purge the hookah. The valve comprises at least one opening leading through the stem heart of the hookah to form a channel leading between the base of the hookah and the outer surroundings of the hookah. At the same time, the opening is sealed by a movable sealing means.

The essence of the invention is that the movable sealing means of the release valve comprises a sealing body provided with a hole for pull a body through the sealing element whereby the sealing element is longitudinally movable along the body. Once the hookah body is pushed through the sealing element, the sealing element has no other means of movement than to move up and down along the hookah body. At the same time, the sealing element is loosely seated, so that it is seated by gravity at the grove channelling through the gasket. The sealing element is placed over the gasket bore when the valve is dormant. By bore being below the sealing element, the bore is covered and closed. When the smoke is drawn in, the vacuum in the water jar pulls the sealing element towards the bire, thus sealing everything better, and on the contrary, when the hookah is puff out, the air pressure in water jar pushes the sealing element upwards away from the bore along the body, thus the sealing element does not restrict the air flow with the smoke.

The inventive solution replaces existing ball solutions, whereby the size of the bore, or number of bores, is limited only by the dimensions of the gasket of the hookah. A large bore, or a group of small bores, can be covered by a single sealing element. The manufacture of the valve according to the invention is very simple, as the bores with the tapered end do not have to be complicated to make, but can simply be drilled through the gasket. Moreover, disassembly and maintenance of the valve is also very easy. The user only has to take care of one sealing element, which has much less tendency to become jammed than the balls in existing valves.

In the context of the invention, it is advantageous if the sealing element has the shape of a ring, a plate or a 3D structure with at least one surface for seating on bore leading through the gasket. Since hookahs are generally shaped like rotating bodies, it is preferable that the plate is also shaped like a rotating body, ideally a ring. On the other hand, the invention also works for very original shapes of hookahs, where the shape may be square or otherwise. Spatial structures will not be an exception, especially in artistically conceived hookahs, provided that the spatial structure will be seated to close the bores of gasket.

Advantageous embodiments of the invention also include one in which the sealing element is provided with a guide flange. The guide flange helps to prevent the sealing element from jamming by crossing against the body during purging puffing. The guide flange ensures smooth up and down movement of the sealing element along the body.

Also advantageous is an embodiment of the invention in which the bore is provided with a recess for a seal. The seal serves a dual function. Firstly, it seals the contact between the sealing element lying down and bore. Secondly, particularly if water enters the valve, it prevents the smooth surfaces wetted by water from sticking together on contact, since the seal does not allow the sealing element to fully seat on the gasket in the area of the bore leading through the gasket.

In an alternative embodiment of the invention, it is preferred if the bore is groove. The groove has a larger cross-section through which air can escape during purging puffing. Moreover, modern machine tools can just as easily produce a series of bores or a single groove.

It is further preferred if the total cross-sectional area of the bore is greater than the cross-sectional area of the hose handle. If this condition is met, it is impossible for the user to push water into the bowl when exhale puffing.

Preferably, the sealing element may be provided with a bearing or friction reducing means integrated into the hole for pulling the body of the hookah through. The less resistance there is to the movement of the sealing element along the body of the hookah, the more reliable the inventive valve will be. In particular, if the sealing element will be an artistic spatial structure having a greater mass than is usual for a conventional inventive valve, any reduction in friction when moving along the body is advantageous because the user does not have to puff through the hookah with increased effort.

Last in line, but no less important the sealing element may be provided with a hydrophobic surface treatment. This treatment prevents water from bonding the moving and non-moving components together in the event of water splashing.

The advantages of the invention include, in particular, the sizing of the overall cross-section of the bore forming the channel through the gasket, which can be achieved by the number of bores, the size of the diameter of the individual bores, or by joining the bores into a single groove, all sealed by a single sealing element. The production of the hookah according to the invention is easy, fast and cost effective, compared to the hookahs produced to date. Moreover, maintenance of the valve according to the invention is not difficult. When the body is disassembled from the gasket, the sealing element is stored and the bores passing through the gasket can be cleaned.

### Overview of Figures in Drawings

The invention will be explained in more detail in the following illustrations, where:
- Figure 1: shows schematically the composition of the individual components of the hookah,
- Figure 2: shows a simplified section of a gasket according to the invention fitted with the body and downstem of the hookah,
- Figure 3: shows a top view of the upper substructure of a gasket with a valve according to the invention,
- Figure 4: shows a top view of a valve sealing element according to the invention,
- Figure 5: shows a section through the valve sealing element from Figure 4.

### Example of the Invention Embodiment

It is understood that the specific embodiments of the invention described and illustrated below are presented for purposes of illustration and not as a limitation of the invention to the examples provided.

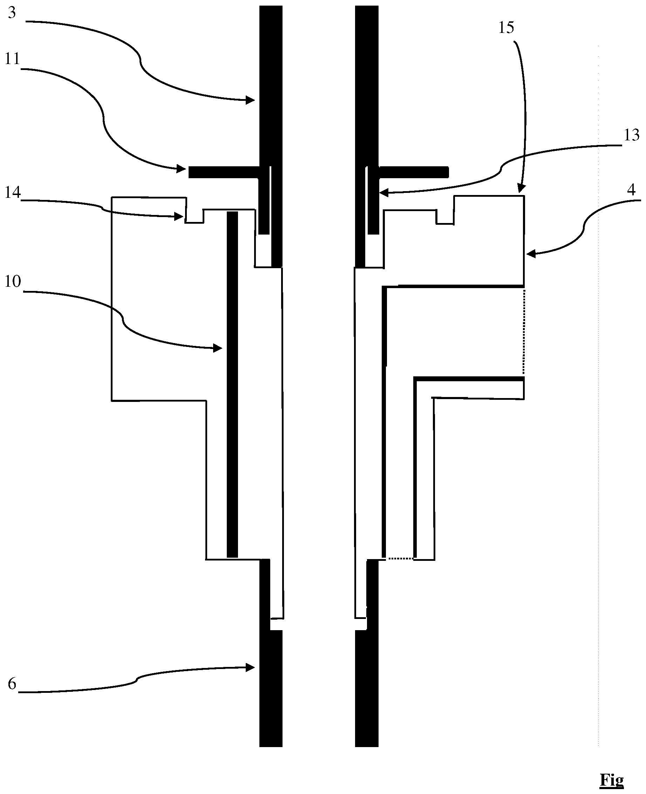

The gasket 4 of the hookah exhibits a main channel through which the hot smoke passes from the body 3 to the downstem 6. The gasket 4 in Figure 2 is shown as if it were inserted into the neck of the water jar 7.

The gasket 4 of the hookahs is made of duralumin, but an expert in the use of materials in the food industry will be able to suggest other materials suitable for use with the hot smoke that is inhaled after it passes through the water column. As far as the duralumin used is concerned, it is inert, mechanically resistant, and easy to machine, compared to, for example, stainless steel, which is very difficult to machine.

In Figure 2, it can be seen how the bore 10 forms a channel of the inventive valve 5 for purging puffing the hookah. The bore 10 passes through the gasket 4, having an outlet at the upper base of the gasket 4. In the section of Figure 2, the bore 10 appears as a single circular channel. This is certainly a possible embodiment, but variations have been successfully tested where the bore 10 have been a group within a release valve 5, or the bore 10 has been enlarged into a groove, the number of grooves also being selectable.

Above the upper base of gasket 4, a sealing element 11 is deployed onto the body 1 to form the second part of the valve 5. The sealing element 11 is also made of duralumin, but other materials may be considered. In the illustrated example embodiment of the invention, the sealing element 11 has the shape of an annulus which is perforated to allow the body 1 to pass through its hole 12. The depicted ring forming the sealing element 11 is provided with a guide flange 13 which lines the hole 12 in the ring, so that the guide flange 13 is adjacent to the body 3. In this way, the sealing element 11 is prevented from tilting and possibly crossing on the body 3. In order to allow the sealing element 11 to fit on the upper base of the gasket 4, a deflection of the material is made on the gasket 4, whereupon the guide flange 13 of the sealing element 11 can easily fit into the resulting space.

A variety of shapes of the sealing element 11 are possible, depending also on the artistic concept of the hookah. Square plates, rectangular plates, spherical sections, 3D structures with a flat base for seating on the bore 10 were tested.

Although the duralumin used can be polished smooth, the treatment of the surface of the sealing element 11 in hole 12 with a hydrophobic varnish was tested. It has been shown that by repelling water from the gap between hole 12 and body 3, the pressure threshold required to open valve 5 by purging puffing is reduced. However, an alternative, which is more structurally challenging, was to form a sealing element 11 into which a small bearing was inserted during manufacture to reduce the purging puff pressure threshold required to open valve 5. The use of a friction reducing means consisting of a Teflon tape glued into the hole 12 of the sealing element 11 proved to be a suitable compromise. The benefit was perceptible when puffing through the hookah, and such modification of the hole 12 of the sealing element 11 was quick and easy. The skilled person will be able to find alternatives to Teflon tape fulfilling the same purpose.

The lower side of the sealing element 11 is seated on the upper base of the gasket 4. Figure 2 shows a recess 14 for the seal, which is not illustrated. In this case, the sealing element 11 will seat against the non-depicted seal. However, the invention would work without the sealing as long as the underside of the sealing element 11 and the surrounding area of bore 10 remain smooth enough to fit together.

The sealing element 11 is mounted on the body 1 with clearance so that it can slide along it. To prevent the sealing element 11 from sliding unnecessarily high, a stop is formed on the body 3, but the stop is not a mandatory technical feature.

When the smoke is drawn from the hookah, the vacuum at the bore 10 pulls the sealing element 11 towards the gasket 4. When the hookah is exhale puffed, the overpressure lifts the sealing element 11 away from the gasket 4. If neither of these activities is occurring, the sealing element 11 is lying on the upper base of the gasket 4 due to Earth gravity.

The channels running through the gasket 4 for drawing smoke from the water jar 7 to the hose 8 are indicated in in Figure 2, but their design and implementation is not an object of the invention because they do not affect the purging puffing and escape of water towards the bowl 1.

If the condition that the total cross-sectional area of the bore 10 is greater than the cross-sectional area of the hose 8 is met, it is not possible by normal efforts to force water out of the water jar 7 when exhale puffing into the bowl 1.

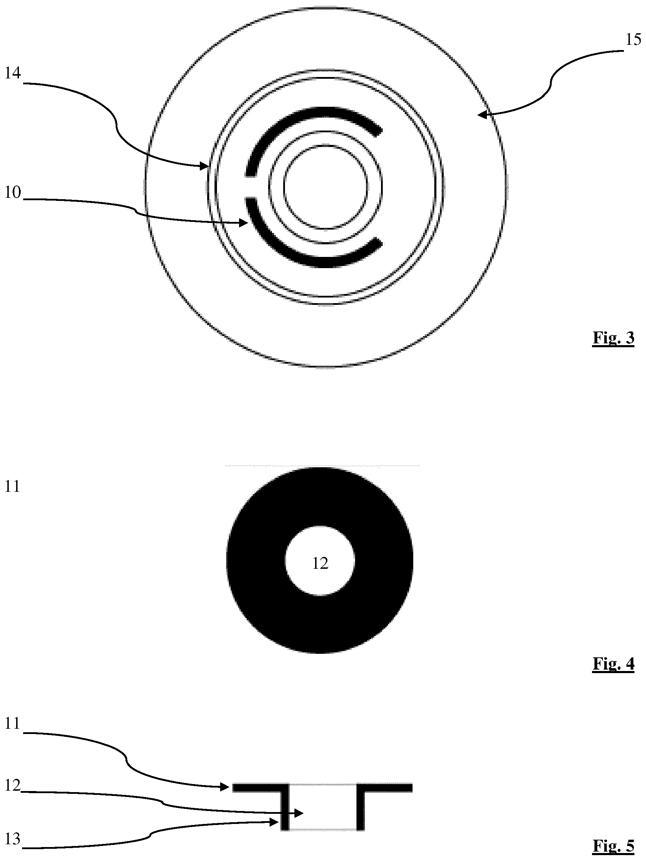

Figure 3 shows the upper base of the gasket 4 as viewed from above. The recess 14 for the sealing can be seen in the figure. Furthermore, two bores 10 in the form of grooves are clearly visible. The last clearly visible part of the gasket 4 is the gasket surface 15, on which decorative elements can be supported, which can also be simultaneously fixed on the body 3 of the hookah.

Figures 4 and 5 show a detail of the sealing element 11. As can be seen from the figures, the sealing element 11 is annular in shape, but if the design of the hookah is different, the sealing element 11 can be adapted in shape. It is important that the sealing element 11 can slide freely along the body 3 and sit above bores 10.

### Industrial applicability

The hookah according to the invention will find application in both newly manufactured and existing hookahs, where a simple replacement of the gasket and optionally the body of all structural components of the hookah is sufficient.

### List of relationship tags

- 1: bowl
- 2: ash tray
- 3: body
- 4: gasket
- 5: valve
- 6: downstem
- 7: water jar
- 8: hose
- 9: hose handle
- 10: bore
- 11: sealing element
- 12: hole
- 13: guide flange
- 14: recess
- 15: gasket surface

## Claims

1. A hookah with a valve (5) for purging the hookah by exhale puffing, i.e. blowing into its water jar (7), comprising a bowl (1) for tobacco, a body (3) ended with a downstem (6) for directing smoke from the bowl (1) into said water jar (7), a gasket (4) for sealing the water jar (7), wherein the gasket (4) is provided with bore for the body (3), further provided with at least one hose (8) and further provided with at least one bore (10) extending through a gasket (4) to form a channel leading between the interior of the water jar (7) and the exterior of the hookah, wherein the bore (10) is sealed by the valve (5), **characterized in that** the valve (5) comprises a sealing element (11) provided with a hole (12) for receiving the body (3) through the sealing element (11) whereby the sealing element (11) is longitudinally movable along the body (3), and the bore (10) is arranged under the sealing element (11) which is placed over it for sealing the bore (10) during the inhale puffing from water jar (7) and for opening the bore (10) during exhale puffing into the water jar (7) by sliding upwards due the action of overpressure in water jar (7).

2. The hookah according to claim 1, **characterized in that** the sealing element (11) is in the form of a plate, ring or 3D structure with at least one surface for seating on the bore (10).

3. The hookah valve according to claim 1 or 2, **characterized in that** the sealing element (11) is provided with a guide flange (13).

4. The hookah according to any one of claims 1 to 3, **characterized in that** the sealing element (11) is provided with a hydrophobic coating.

5. The hookah according to any one of claims 1 to 4, **characterized in that** the bore (10) has the shape of a continuous groove.

6. The hookah according to any one of claims 1 to 5, **characterized in that** the total cross-sectional area of the bore (10) is greater than the cross-sectional area of a hose (8) of the hookah.

7. The hookah according to any one of claims 1 to 6, **characterized in that** the sealing element (11) is provided with a bearing or friction reducing means integrated in the hole (12).

8. The hookah according to any one of claims 1 to 7, **characterized in that** the bore (10) is provided with a groove for its sealing.

## Patentansprüche

1. Wasserpfeife mit einem Ventil (5) zum Entleeren der Wasserpfeife durch Ausatmen, d.h. in ihr Wassergefäß (7) zu blasen, umfassend eine Schale (1) für Tabak, einen Körper (3), der mit einem Stiel (6) endet, um den Rauch aus der Schale (1) in das Wassergefäß (7) zu leiten, eine Dichtung (4) zum Abdichten des Wassergefäßes (7), wobei die Dichtung (4) mit einer Bohrung für den Körper (3) versehen ist, ferner mit mindestens einem Schlauch (8) versehen ist und ferner mit mindestens einer Bohrung (10) versehen ist, die sich durch eine Dichtung (4) erstreckt, um einen Kanal zu bilden, der zwischen dem Inneren des Wasserbehälters (7) und dem Äußeren der Wasserpfeife führt, wobei die Bohrung (10) durch das Ventil (5) abgedichtet ist, **dadurch gekennzeichnet, dass** das Ventil (5) ein Dichtungselement (11) umfasst, das mit einem Loch (12) zur Aufnahme des Körpers (3) durch das Dichtungselement (11) versehen ist, wobei das Dichtungselement (11) in Längsrichtung entlang des Körpers (3) beweglich ist, und die Bohrung (10) unter dem Dichtungselement (11) angeordnet ist, das darüber platziert ist, um die Bohrung (10) während des Einatmens aus dem Wassertank (7) abzudichten und um die Bohrung (10) während des Ausatmens in den Wassertank (7) zu öffnen, indem sie durch die Wirkung des Überdrucks im Wassertank (7) nach oben gleitet.

2. Die Wasserpfeife nach Anspruch 1, **dadurch gekennzeichnet, dass** das Dichtungselement (11) die Form einer Platte, eines Rings oder einer 3D-Struktur mit mindestens einer Fläche zum Aufsetzen auf die Bohrung (10) hat.

3. Die Wasserpfeife nach Anspruch 1 oder 2, **dadurch gekennzeichnet, dass** das Dichtelement (11) mit einem Führungsflansch (13) versehen ist.

4. Die Wasserpfeife nach einem der Ansprüche 1 bis 3, **dadurch gekennzeichnet, dass** das Dichtungselement (11) mit einer hydrophoben Beschichtung versehen ist.

5. Die Wasserpfeife nach einem der Ansprüche 1 bis 4, **dadurch gekennzeichnet, dass** die Bohrung (10) die Form einer durchgehenden Rille hat.

6. Die Wasserpfeife nach einem der Ansprüche 1 bis 5, **dadurch gekennzeichnet, dass** die Gesamtquerschnittsfläche der Bohrung (10) größer ist als die Querschnittsfläche eines Schlauches (8) der Wasserpfeife.

7. Die Wasserpfeife nach einem der Ansprüche 1 bis 6, **dadurch gekennzeichnet, dass** das Dichtungselement (11) mit einem in das Loch (12) integrierten Lager oder reibungsmindernden Mittel versehen ist.

8. Die Wasserpfeife nach einem der Ansprüche 1 bis 7, **dadurch gekennzeichnet, dass** die Bohrung (10) mit einer Nut für ihre Abdichtung versehen ist.

## Revendications

1. Narguilé muni d'une valve (5) pour purger le narguilé en expirant, c'est-à-dire en soufflant dans le pot à eau (7). en soufflant dans son pot à eau (7), comprenant un bol (1) pour le tabac, un corps (3) terminé par une tige descendante (6) pour diriger la fumée du bol (1) dans ledit pot à eau (7), un joint (4) pour sceller le pot à eau (7), dans lequel le joint (4) est pourvu d'un alésage pour le corps (3), muni d'au moins un tuyau (8) et d'au moins un orifice (10) traversant le joint (4) pour former un canal entre l'intérieur de la jarre à eau (7) et l'extérieur du narguilé, l'orifice (10) étant scellé par la valve (5), **caractérisé en ce que** la valve (5) comprend un élément d'étanchéité (11) pourvu d'un trou (12) pour recevoir le corps (3) à travers l'élément d'étanchéité (11), l'élément d'étanchéité (11) étant mobile longitudinalement le long du corps (3), et l'orifice (10) est disposé sous l'élément d'étanchéité (11) qui est placé au-dessus pour sceller l'orifice (10) pendant l'inhalation du pot d'eau (7) et pour ouvrir l'orifice (10) pendant l'exhalation du pot d'eau (7) en glissant vers le haut sous l'action de la surpression dans le pot d'eau (7).

2. Le narguilé selon la revendication 1, **caractérisé par le fait que** l'élément d'étanchéité (11) se présente sous la forme d'une plaque, d'un anneau ou d'une structure 3D avec au moins une surface pour s'appuyer sur l'alésage (10).

3. Le narguilé selon la revendication 1 ou 2, **caractérisée par le fait que** l'élément d'étanchéité (11) est pourvu d'une bride de guidage (13).

4. Le narguilé selon l'une des revendications 1 à 3, **caractérisé par le fait que** l'élément d'étanchéité (11) est pourvu d'un revêtement hydrophobe.

5. Le narguilé selon l'une des revendications 1 à 4, **caractérisé par le fait que** l'alésage (10) a la forme d'une rainure continue.

6. Le narguilé selon l'une des revendications 1 à 5, **caractérisé par le fait que** la surface totale de la section transversale de l'alésage (10) est supérieure à la surface de la section transversale d'un tuyau (8) du narguilé.

7. Le narguilé selon l'une des revendications 1 à 6, **caractérisé par le fait que** l'élément d'étanchéité (11) est pourvu d'un palier ou d'un moyen de réduction de la friction intégré dans le trou (12).

8. Le narguilé selon l'une des revendications 1 à 7, **caractérisé par le fait que** l'alésage (10) est pourvu d'une rainure pour son étanchéité .
